# EUROPÄISCHE PATENTSCHRIFT

(11) **EP 4 047 715 B1**
(45) Veröffentlichungstag und Bekanntmachung des Hinweises auf die Patenterteilung: **10.12.2025**
(21) Anmeldenummer: 22154702.9
(22) Anmeldetag: 02.02.2022
(51) Int. Cl.: H01M 10/48, B60K 1/00, B60L 50/64, H01M 50/242, H01M 50/249

(54) **TRAKTIONSBATTERIEANORDNUNG FÜR EIN KRAFTFAHRZEUG ZUM ERFASSEN EINES AUFPRALLS AUF EINER TRAKTIONSBATTERIE SOWIE KRAFTFAHRZEUG MIT EINER TRAKTIONSBATTERIEANORDNUNG**
TRACTION BATTERY ASSEMBLY FOR A MOTOR VEHICLE FOR DETECTING AN IMPACT ON A TRACTION BATTERY AND MOTOR VEHICLE COMPRISING A TRACTION BATTERY ASSEMBLY
AGENCEMENT DE BATTERIE DE TRACTION POUR UN VÉHICULE AUTOMOBILE PERMETTANT DE DÉTECTER UN IMPACT SUR UNE BATTERIE DE TRACTION, AINSI QUE VÉHICULE AUTOMOBILE DOTÉ D'UN AGENCEMENT DE BATTERIE DE TRACTION

(30) Priorität: 18.02.2021 DE 102021103862
(43) Veröffentlichungstag der Anmeldung: 24.08.2022
(73) Patentinhaber: Audi AG, 85045 Ingolstadt (DE); Dr. Ing. h.c. F. Porsche Aktiengesellschaft, 70435 Stuttgart (DE); AUMOVIO Germany GmbH, 60488 Frankfurt am Main (DE)
(72) Erfinder: RAUSCH, Julius, 74076 Heilbronn (DE); STOLL, Oliver, 69429 Waldbrunn (DE); GEIßLER, Udo, 63826 Blankenbach (DE); BRANDIC, Ilija, 74385 Pleidelsheim (DE); GRUPP, Markus, 75399 Unterreichenbach (DE); VETTER, Johannes, 63846 Laufach (DE); WEBER, Simon, 93057 Regensburg (DE)
(74) Vertreter: Hofstetter, Schurack & Partner

(56) Entgegenhaltungen:
- DE-A1- 102018 126 572
- DE-A1- 102019 207 435

## Beschreibung

Die Erfindung betrifft eine Traktionsbatterieanordnung für ein Kraftfahrzeug zum Erfassen eines Aufpralls auf eine Traktionsbatterie sowie ein Kraftfahrzeug mit einer Traktionsbatterieanordnung.

Heutzutage werden viele Kraftfahrzeuge teil- oder vollelektrisch ausgebildet, beispielsweise als Hybridfahrzeug oder als rein elektrisch betriebenes Kraftfahrzeug. Eine dafür benötigte Antriebsbatterie beziehungsweise Traktionsbatterie, die üblicherweise mehrere Batteriezellen umfasst, ist dabei meistens in einem Bodenbereich des Kraftfahrzeugs angeordnet. Das hat den Nachteil, dass Stöße von unten direkt auf die Traktionsbatterie treffen, was zu Schäden an der Traktionsbatterie führen kann. Um Schäden durch eine Intrusion von unterhalb zu begrenzen oder zu vermeiden, ist es bekannt, ein Unterbodenelement für die Traktionsbatterie zu verwenden, das beispielsweise als Unterfahrschutz ausgebildet sein kann, um die Traktionsbatterie vor einer direkten Krafteinwirkung zu schützen. Dabei kann das Unterbodenelement eine Verkleidung am Unterboden der Traktionsbatterie und/oder des Kraftfahrzeugs sein, die die Traktionsbatterie vor Umwelteinflüssen und/oder mechanischen Einflüssen abschirmt.

Jedoch hält auch ein Unterbodenelement nicht alle Stöße von der Traktionsbatterie fern und es kann bei starken Stößen von unterhalb, beispielsweise bei einem Aufsetzen des Kraftfahrzeugs bei einer Pollerüberfahrt, dazu kommen, dass das Unterbodenelement in die Traktionsbatterie gedrückt wird und hierdurch Schäden an der Traktionsbatterie entstehen. Das heißt, es kann durch einen Aufprall zu einer Intrusion der Traktionsbatterie kommen. Damit diese Art von Schäden festgestellt werden können und Folgeschäden am Kraftfahrzeug und/oder Gefahren für einen Fahrer des Kraftfahrzeugs zu minimieren, ist ein Erfassen eines Aufpralls auf die Traktionsbatterie notwendig, um Rückschlüsse zu ziehen, ob Batteriezellen der Traktionsbatterie durch einen Aufprall beschädigt worden sind. Das heißt, es wird ein Sensierungskonzept benötigt, um einen Stoß beziehungsweise ein Verformen der Traktionsbatterie feststellen zu können.

Aus der DE 10 2018 126 572 A1 ist eine Hochvoltbatterie für ein elektrisch antreibbares Kraftfahrzeug bekannt, umfassend zumindest ein Batteriemodul mit einer Vielzahl von Batteriezellen, ein Batteriegehäuse mit Gehäusewänden, welche einen Aufnahmerahmen für das zumindest eine Batteriemodul umschließen, und zumindest ein Federelement, welches dazu ausgelegt ist, das Batteriemodul gegenüber dem Batteriegehäuse elastisch zu lagern und eine stoßbedingte, in die Hochvoltbatterie eingeleitete Kraft aufzunehmen. Das zumindest eine Federelement ist als ein elastisches Fluidpolster ausgebildet, welches zwischen zumindest einer Gehäusewand und einer der zumindest einen Gehäusewand zugewandten Seite des zumindest einen Batteriemoduls angeordnet ist.

Aus der DE 10 2019 207 435 A1 ist ein Unterfahrschutz für ein Fahrzeug bekannt, wobei der Unterfahrschutz über dem befahrbaren Gelände am Unterboden des Fahrzeugs angeordnet ist und aus wenigstens drei Lagen, nämlich einer dem befahrenden Gelände benachbarten Außenlage, einer dem Fahrzeuginneren benachbarten Innenlage und einer einen definierten Abstand zwischen Außenlage und Innenlage erzeugenden Zwischenlage besteht. Eine durch Krafteinwirkung verursachte Annäherung der Außenlage und der Innenlage und/oder der direkt oder indirekt daran angeordneten Elemente eines elektrischen Schaltkreises bewirkt eine detektierbare Veränderung einer elektrischen Eigenschaft des elektrischen Schaltkreises.

Der Erfindung liegt die Aufgabe zugrunde, einen Aufprall auf eine Traktionsbatterie, die von unterhalb des Kraftfahrzeugs stammt, zu erfassen.

Diese Aufgabe wird durch die unabhängigen Patentansprüche gelöst. Vorteilhafte Weiterbildungen der Erfindung sind in den abhängigen Patentansprüchen, der folgenden Beschreibung sowie den Figuren offenbart.

Durch die Erfindung ist eine Traktionsbatterieanordnung für ein Kraftfahrzeug zum Erfassen eines Aufpralls auf eine Traktionsbatterie bereitgestellt. Die Traktionsbatterieanordnung umfasst die Traktionsbatterie und ein Unterbodenelement, das an einer Unterseite der Traktionsbatterie angeordnet ist, wobei das Unterbodenelement zumindest einen vertieften Bereich aufweist, der als Aussparung des Unterbodenelements bereitgestellt ist, in dem eine luftgefüllte Kammer zwischen dem Unterbodenelement und der Unterseite der Traktionsbatterie ausgebildet ist, wobei die Kammer mit einer Auswerteeinheit gekoppelt ist, die dazu ausgebildet ist, ein Drucksignal eines Luftdrucks in der Kammer zu bestimmen und in Abhängigkeit des Drucksignals den Aufprall auf die Traktionsbatterie zu erfassen.

Mit anderen Worten ist unterhalb der Traktionsbatterie ein Unterbodenelement angeordnet, wobei zwischen der Traktionsbatterie und dem Unterbodenelement zusätzlich eine Kühlung für die Traktionsbatterie bereitgestellt sein kann. Das Unterbodenelement weist einen vertieften Bereich in Form einer Aussparung auf, über der vorzugsweise die Batteriezellen der Traktionsbatterie angeordnet werden können. Der vertiefte Bereich kann beispielsweise länglich über das Unterbodenelement verlaufen und zusätzlich einen Luftspalt zwischen dem Unterbodenelement und der Traktionsbatterie bereitstellen und so die luftgefüllte Kammer bereitstellen. Diese luftgefüllte Kammer kann mit einer Auswerteeinheit verbunden sein, die zumindest einen Drucksensor und eine Recheneinrichtung, wie beispielsweise einen Computer oder ein Steuergerät, umfassen kann. Wirkt eine physische Kraft von unterhalb auf das Unterbodenelement, kann sich die luftgefüllte Kammer verformen beziehungsweise komprimieren und so einen erhöhten Luftdruck erzeugen, der als Drucksignal durch die Auswerteeinheit gemessen werden kann. Mit anderen Worten reduziert sich bei einer Deformation des Unterbodenelements und damit der luftgefüllten Kammer das Volumen, das als messbarer Druckanstieg bestimmt werden kann.

Durch die Erfindung ergibt sich der Vorteil, dass mit einem relativ geringen Aufwand und mit geringen Kosten ein Aufprall von unterhalb auf das Kraftfahrzeug, insbesondere die Traktionsbatterieanordnung, bestimmt werden kann. Vorzugsweise können für die Traktionsbatterieanordnung auf dem Unterbodenelement auch mehrere luftgefüllte Kammern ausgebildet sein, die jeweils mit der Auswerteeinheit oder einer separaten Auswerteeinheit verbunden sind. So kann beispielsweise auch eine Lokalisierung stattfinden, wo der Aufprall auf die Traktionsbatterieanordnung stattgefunden hat.

Die Erfindung umfasst auch Ausführungsformen, durch die sich zusätzliche Vorteile ergeben.

In einer Ausführungsform ist vorgesehen, dass die Kammer seitlich umlaufend durch ein Dichtmaterial, insbesondere durch eine Polyurethandichtung, nach außen abgedichtet ist. Das heißt, dass beispielsweise ein Dichtschaum verwendet werden kann, insbesondere aus Polyurethan, der die Kammer nach außen abdichtet und somit einen Hohlkörper bereitstellt, in dem bei einem Aufprall durch Verringerung des Volumens Druck aufgebaut werden kann. Durch das Dichtmaterial, insbesondere durch Polyurethan, ergibt sich der Vorteil, dass das Unterbodenelement bei der Herstellung an die Traktionsbatterie angepresst werden kann und somit eine dichte Kammer entsteht, in der bei einer Druckerhöhung der Luftdruck nicht an die Umgebung nach außen abgegeben wird, sondern an die Auswerteeinheit. Somit ist das Drucksignal bei einem Aufprall erhöht und kann besser durch die Auswerteeinheit bestimmt werden.

In einer weiteren bevorzugten Ausführungsform ist vorgesehen, dass die Kammer in dem vertieften Bereich als ein luftgefüllter Folienkörper ausgebildet ist. Das heißt, dass im vertieften Bereich des Unterbodenelements ein Folienkörper angeordnet werden kann, der mit Luft gefüllt ist und der mit der Auswerteeinheit gekoppelt ist. Beispielsweise kann als Folienkörper ein Folienkissen verwendet werden, das einteilig ausgebildet sein kann und beispielsweise mittels Blasformen hergestellt ist. Der Folienkörper kann vorzugsweise in einem definierten Bauraum, insbesondere in dem vertieften Bereich, ausgerollt beziehungsweise platziert werden, wobei der Folienkörper seitlich beispielsweise über vorhandene Laschen in dem vertieften Bereich befestigt werden kann. Durch diese Ausführungsform ergibt sich der Vorteil, dass insbesondere Feuchtigkeit, die aufgrund einer Kühlung der Traktionsbatterie in dem vertieften Bereich entstehen kann, abgeleitet werden kann, da der vertiefte Bereich selber nicht luftdicht verschlossen werden muss und somit Abflüsse für Kondenswasser bereitgestellt werden können, da zur Sensierung des Drucksignals der abgeschlossene Folienkörper dient. Somit kann ein Korrosionsrisiko für umliegende Bauteile, insbesondere die Traktionsbatterie, verringert werden.

Vorzugsweise ist vorgesehen, dass in dem Folienkörper zumindest ein Abstandhalter angeordnet ist, der dazu ausgebildet ist, ein luftgefülltes Volumen in dem Folienkörper aufrecht zu erhalten. Des Weiteren kann der Abstandhalter eine Stabilität des Folienkörpers erhöhen. Der Folienkörper kann beispielsweise als dünne Folie ausgebildet sein, die bei niedrigem Luftdruck in sich zusammenfallen kann. Durch die Verwendung eines Abstandhalters kann ein Volumen in dem Folienkörper beibehalten werden, das bei Deformation des Unterbodenelements und somit bei einer Komprimierung des Folienkörpers das Drucksignal erzeugen kann. Des Weiteren kann der Abstandhalter eine Übertragung und Weiterleitung des Drucksignals fördern. Der zumindest eine Abstandhalter kann vorzugsweise in einer Noppenform oder mittels Stegen ausgebildet sein und sich über den gesamten Folienkörper erstrecken. Vorzugsweise ist vorgesehen, dass der Abstandhalter an ausreichend vielen Punkten im Folienkörper eine Abstützung generiert, sodass ein genügend großes Luftvolumen bereitgestellt werden kann.

Besonders bevorzugt ist vorgesehen, dass der Abstandhalter elastisch deformierbar ausgebildet ist. Zum Beispiel kann der Abstandhalter als Schaum, insbesondere als Polyurethanschaum oder als Partikelschaum, ausgebildet sein. Weitere bevorzugte Alternativen sind, dass der Abstandhalter Federelemente und/oder Abstandstextilien aufweist, die einem Zusammenfallen des Folienkörpers entgegenwirken. Durch den elastischen Abstandhalter ergibt sich der Vorteil, dass der Folienkörper "selbst aufblasbar" ist und sich an die umgebende Kontur anschmiegen kann. Somit kann der Folienkörper wie eine selbst aufblasbare Isomatte ein Volumen erzeugen, das bei einer Deformierung einen Druck aufbauen kann. Bei einer Montage des Unterbodenelements mit der Traktionsbatterie kann so auch der Folienkörper zusammengepresst werden, um sich dem Bauraum im vertieften Bereich anzupassen.

Vorzugsweise ist vorgesehen, dass der Folienkörper eine Mehrzahl von Luftkammern aufweist. Das heißt, dass der Folienkörper beispielsweise zweiteilig oder mehrteilig ausgebildet sein kann. Dies kann beispielsweise durch Verschweißen oder Verkleben von mindestens zwei tiefgezogenen Folien oder Formhälften des Folienkörpers erreicht werden. Hierdurch ergibt sich der Vorteil, dass ein Volumen des Folienkörpers verbessert aufrechterhalten werden kann, da das Volumen des Folienkörpers auf mehrere Luftkammern aufgeteilt werden kann. Somit fällt der Folienkörper nicht so schnell in sich zusammen, da in den einzelnen Luftkammern ein höherer Druck bei der Herstellung des Folienkörpers bereitgestellt werden kann. Vorzugsweise kann jede der Luftkammern mit der Auswerteeinheit, insbesondere einem Drucksensor der Auswerteeinheit, gekoppelt sein, sodass eine genauere Lokalisierung des Aufpralls durchgeführt werden kann, indem festgestellt werden kann, welche Luftkammer das höchste Drucksignal liefert.

In einer weiteren Ausführungsform ist vorgesehen, dass die Kammer zumindest ein Einlassventil und einen Schlauchanschluss aufweist, wobei der Schlauchanschluss dazu ausgebildet ist, die Kammer über einen Druckschlauch mit der Auswerteeinheit zu verbinden und wobei das Einlassventil dazu ausgebildet ist, Luft mit einem vorgegebenen Druck in die Kammer einzuleiten, wobei das Einlassventil über den Druckschlauch und/oder separat zum Druckschlauch mit der Kammer gekoppelt ist. Mit anderen Worten kann die luftgefüllte Kammer, insbesondere der Folienkörper, zumindest ein Einlassventil für Luft und einen Schlauchanschluss aufweisen, an dem ein Druckschlauch befestigt werden kann, der ein Drucksignal aus der Kammer zu der Auswerteeinheit weiterleiten kann. Somit kann beispielsweise über das Einlassventil bei der Herstellung der Traktionsbatterieanordnung ein Druck in der Kammer aufgebaut werden. Somit herrscht in der Kammer ein vorgegebener Druck, der durch die Auswerteeinheit gemessen werden kann, wobei eine Druckänderung des vorgegebenen Drucks einen Aufprall anzeigen kann. Vorzugsweise kann vorgesehen sein, dass die Kammer kontinuierlich über das Einlassventil mit einem vorgegebenen Druck beaufschlagt wird, der insbesondere konstant gehalten werden kann. Bei einer schnell auftretenden Druckänderung kann dann durch die Auswerteeinheit festgestellt werden, dass ein Aufprall auf die Traktionsbatterieanordnung stattgefunden hat. Der Vorteil des Schlauchanschlusses und der Verbindung über den Druckschlauch zu der Auswerteeinheit ist es, dass die Auswerteeinheit nicht direkt an der luftgefüllten Kammer platziert werden muss, wodurch die Herstellung der Traktionsbatterieanordnung vereinfacht wird, da nicht so viel Bauraum an der Kammer bereitgestellt werden muss. Das Einlassventil und der Schlauchanschluss können beispielsweise an separaten Positionen der Kammer angeordnet sein. Alternativ oder zusätzlich kann das Einlassventil jedoch auch über den Schlauchanschluss, insbesondere über einen Drucksensor der Auswerteeinheit, zu der Kammer geführt sein. Somit kann zusätzlich Bauraum eingespart werden.

Eine weitere Ausführungsform sieht vor, dass die Auswerteeinheit dazu ausgebildet ist, zum Erfassen des Aufpralls das Drucksignal auf ein Druckmaximum, eine Dauer des Drucks über einen vorgegebenen Schwellenwert, ein Integral über dem Druck und/oder eine Flankensteilheit zu analysieren. Mit anderen Worten kann durch die Auswerteeinheit, insbesondere eine Recheneinrichtung der Auswerteeinheit, das Drucksignal mittels eines Algorithmus analysiert und ausgewertet werden. Insbesondere kann, um festzustellen, ob ein Aufprall stattgefunden hat oder nicht, ein Druckmaximum des Drucksignals mit einem vorgegebenen Druckmaximumschwellenwert verglichen werden, es kann eine Dauer des Drucks daraufhin überprüft werden, ob diese über einen vorgegebenen Schwellenwert liegt, es kann ein Integral über einen Druckverlauf bestimmt werden und/oder es kann eine Flankensteilheit, das heißt eine Geschwindigkeit des Druckanstiegs in der Kammer, zur Bestimmung analysiert werden, ob ein Aufprall auf die Traktionsbatterieanordnung und somit auf die Traktionsbatterie stattgefunden hat oder nicht. Somit kann ein Aufprall verbessert detektiert werden und es können beispielsweise falsch-positive Warnungen verringert werden, die beispielsweise aufgrund eines normalen Fahrbetriebs des Kraftfahrzeugs auftreten können.

In einer weiteren Ausführungsform ist vorgesehen, dass die Auswerteeinheit dazu ausgebildet ist, Fahrzeugsensordaten und/oder Umfeldsensordaten des Kraftfahrzeugs zu empfangen und das bestimmte Drucksignal anhand der Fahrzeugsensordaten und/oder der Umfeldsensordaten zu plausibilisieren, und/oder eine Sensitivität zum Erfassen des Aufpralls einzustellen. Mit anderen Worten kann die Auswerteeinheit Fahrzeugsensordaten und/oder Umfeldsensordaten, beispielsweise über einen Fahrzeugbus, erhalten. Diese können dann von der Auswerteeinheit mit dem Drucksignal verglichen werden, um festzustellen, ob ein Aufprall vorliegt oder nicht. Fahrzeugsensordaten können beispielsweise eine Beschleunigung des Kraftfahrzeugs in jede Raumrichtung und daraus abgeleitete Kriterien, wie zum Beispiel eine Geschwindigkeit, umfassen. Des Weiteren können die Fahrzeugsensordaten einen Federweg von Stoßdämpfern des Kraftfahrzeugs bereitstellen, aus denen beispielsweise ein Überfahren von Schwellen, insbesondere eines Bordsteins, festgestellt werden kann. Somit kann ermittelt werden, ob das Drucksignal mit einem tatsächlich gemessenen Ereignis außerhalb des Fahrzeugs korreliert werden kann, wodurch die Bestimmung des Aufpralls verbessert durchgeführt werden kann und falsch-positive Detektionen verringert werden können. Des Weiteren können Umfeldsensordaten, die beispielsweise Sensordaten einer Fahrzeugkamera und/oder eines Fahrzeugradars umfassen können, verwendet werden, um äußere Begebenheiten mit dem Drucksignal zu korrelieren. So kann beispielsweise eine aufgenommene Bodenunebenheit, die mit dem Drucksignal plausibilisiert wird, einen Hinweis auf eine Beschädigung und einen Aufprall auf die Traktionsbatterieanordnung geben. Alternativ oder zusätzlich kann mittels der Fahrzeugsensordaten und/oder der Umfeldsensordaten auch eine Sensitivität zum Erfassen des Aufpralls eingestellt werden. Das heißt, dass beispielsweise abhängig von einer Geschwindigkeit des Fahrzeugs eingestellt werden kann, ab welcher Druckänderung ein Aufprall erkannt werden soll, da beispielsweise bestimmte Schadensereignisse nur in einem bestimmten Geschwindigkeitsbereich auftreten beziehungsweise kritisch sind. Auch kann beispielsweise in Abhängigkeit von erkannten Objekten auf einer Fahrbahn die Sensitivität eingestellt werden, bei welcher Druckänderung der Aufprall erfasst werden soll. So kann beispielsweise bei erkannten Fahrbahnschäden oder einer Bremsschwelle die Auswerteeinheit mit dieser Information angesteuert werden, um die Sensitivität zur Erkennung des Aufpralls zu erhöhen. Insgesamt kann somit ein Erfassen des Aufpralls auf die Traktionsbatterieanordnung verbessert werden.

Erfindungsgemäß ist auch ein Kraftfahrzeug mit einer Traktionsbatterieanordnung nach einem der vorhergehenden Ausführungsformen bereitgestellt. Hierbei ergeben sich gleiche Vorteile und Variationsmöglichkeiten wie bei der Traktionsbatterieanordnung. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Ein weiterer Aspekt der Erfindung betrifft ein Verfahren zum Erfassen eines Aufpralls auf eine Traktionsbatterieanordnung nach einem der vorhergehenden Ausführungsformen, wobei in dem Verfahren ein Drucksignal in der Kammer bestimmt wird, bestimmt wird, ob eine Änderung des Drucksignals über einen vorgegebenen Druckschwellenwert liegt, und Erfassen des Aufpralls auf die Traktionsbatterie, falls festgestellt wird, dass die Änderung des Drucksignals über dem vorgegebenen Schwellenwert liegt. Hierbei ergeben sich gleiche Vorteile und Variationsmöglichkeiten, wie bei der Traktionsbatterieanordnung.

Zu der Erfindung gehört auch eine Steuervorrichtung für das Kraftfahrzeug. Die Steuervorrichtung kann eine Auswerteeinheit und eine Datenverarbeitungsvorrichtung oder eine Prozessoreinrichtung aufweisen, die dazu eingerichtet ist, ein Verfahren zum Erfassen eines Aufpralls auf eine Traktionsbatterie bei einer Traktionsbatterieanordnung gemäß einer der vorhergehenden Ausführungsformen durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Zu der Erfindung gehören auch Weiterbildungen des Verfahrens, die Merkmale aufweisen, wie sie bereits im Zusammenhang mit den Weiterbildungen der erfindungsgemäßen Traktionsbatterieanordnung beschrieben worden sind. Aus diesem Grund sind die entsprechenden Weiterbildungen des Verfahrens hier nicht noch einmal beschrieben.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: ein schematisch dargestelltes Kraftfahrzeug mit einer Traktionsbatterieanordnung gemäß einer beispielhaften Ausführungsform;
- Fig. 2: eine schematische Ansicht von oben auf ein Unterbodenelement gemäß einer beispielhaften Ausführungsform;
- Fig. 3: eine schematische Querschnittsansicht eines Unterbodenelements gemäß einer beispielhaften Ausführungsform.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

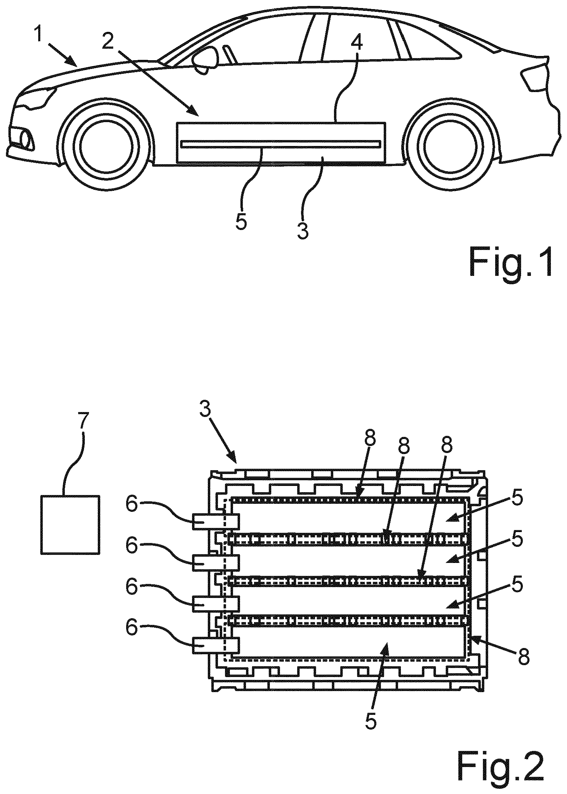

In Fig. 1 ist ein schematisiertes Kraftfahrzeug 1 mit einer Traktionsbatterieanordnung 2 gemäß einer beispielhaften Ausführungsform dargestellt. Das Kraftfahrzeug 1 kann beispielsweise ein Personenkraftwagen sein, der elektrisch betrieben wird. Zur Energieversorgung kann die Traktionsbatterieanordnung 2 des Kraftfahrzeugs 1 eine Traktionsbatterie 4 beziehungsweise Antriebsbatterie umfassen, wobei die Traktionsbatterie 4 beispielsweise mehrere Batteriezellen aufweisen kann, die in dieser Fig. nicht dargestellt sind.

Zum Schutz der Traktionsbatterie 4 vor Stößen von unterhalb des Kraftfahrzeugs 1 kann die Traktionsbatterieanordnung 2 ein Unterbodenelement 3 aufweisen, das an einer Unterseite der Traktionsbatterie 4 angeordnet ist und das als Unterfahrschutz ausgebildet sein kann. Das heißt, dass das Unterbodenelement 3 unterhalb des Anbringungsortes der Traktionsbatterie 4 positioniert ist. Zusätzlich kann die Traktionsbatterieanordnung 2 eine Kühlung für die Traktionsbatterie 4 aufweisen, die vorzugsweise zwischen der Traktionsbatterie 4 und dem Unterbodenelement 3 angeordnet ist, was in dieser Fig. nicht dargestellt ist. Das Unterbodenelement 3 kann vorzugsweise dazu ausgebildet sein, die Traktionsbatterie 4 vor mechanischen Einflüssen zu schützen. Dennoch kann es vorkommen, dass aufgrund eines starken Stoßes von unterhalb des Kraftfahrzeugs 1, beispielsweise bei einem Aufsetzen einer Pollerüberfahrt, zu einem Aufprall auf die Traktionsbatterie 4 kommt. Um das festzustellen und einen Fahrer des Kraftfahrzeugs 1 vor einer Beschädigung der Traktionsbatterie 4 zu warnen, kann daher ein Sensierungskonzept für die Traktionsbatterie 4 vorgesehen sein.

Zur Bereitstellung des Sensierungskonzepts können in dem Unterbodenelement 3 einer oder mehrere vertiefte Bereiche 5 bereitgestellt sein, in denen eine luftgefüllte Kammer ausgebildet wird. Die luftgefüllte Kammer kann hierbei entweder durch einen Hohlraum bereitgestellt sein, der sich zwischen dem vertieften Bereich 5 und der Traktionsbatterie 4 bildet, oder die Luftgefüllte Kammer kann durch eine Anordnung einer Vorrichtung in dem vertieften Bereich, insbesondere durch Anordnung eines Folienkörpers, erreicht werden. Bei einer Verformung des Unterbodenelements 3 und somit bei einer Komprimierung der luftgefüllten Kammer kann dann eine Druckänderung in der Kammer entstehen, der detektiert werden kann, wodurch ein Aufprall auf die Traktionsbatterie feststellbar ist.

In Fig. 2 ist eine schematische Draufsicht auf das Unterbodenelement 3 des Kraftfahrzeugs 1 aus Richtung der Traktionsbatterie 4 dargestellt. Das Unterbodenelement 3 kann beispielsweise mehrere vertiefte Bereiche 5 aufweisen, die als luftgefüllte Kammer zwischen dem Unterbodenelement 3 und der Traktionsbatterie 4 dienen können. Die jeweiligen vertieften Bereiche 5 können als flächige Bereiche ausgebildet sein, wobei über diesen Bereichen 5 die Batteriezellen der Traktionsbatterie 4 angeordnet werden können. Zwischen den Batteriezellen der Traktionsbatterie 4 und dem Boden des jeweiligen vertieften Bereichs 5 kann sich ein Luftspalt beziehungsweise ein Hohlkörper bilden, der bei einem Aufprall verformt werden kann. Um einen Druckabbau aus den Kammern nach außen zu verringern, kann zusätzlich vorgesehen sein, dass ein Dichtmaterial 8, insbesondere eine Polyurethandichtung, seitlich um die vertieften Bereiche 5 aufgetragen ist, die die luftgefüllten Kammern seitlich umlaufend abdichten, wobei die Kammern nach oben und unten durch das Unterbodenelement 3 und die Traktionsbatterie 4 abgedichtet werden.

Wird ein Druckunterschied festgestellt, kann dieser als Aufprall erfasst werden. Um dieses Drucksignal zu detektieren, können die jeweiligen Kammern in den vertieften Bereichen 5 Schlauchanschlüsse 6 aufweisen, die das Drucksignal weiterleiten, insbesondere zu einer Auswerteeinheit 7. Die Auswerteeinheit 7 kann zumindest einen Drucksensor und eine Recheneinheit, beispielsweise einen Computer, aufweisen, die dazu ausgebildet sind, das Drucksignal zu analysieren und somit einen Aufprall auf die Traktionsbatterieanordnung 2 zu bestimmen. Vorzugsweise kann die Auswerteeinheit 7 ferner dazu ausgebildet sein, Fahrzeugsensordaten und/oder Umfeldsensordaten des Kraftfahrzeugs 1 zu empfangen und das Drucksignal anhand dieser Sensordaten zu plausibilisieren. Das heißt, dass beispielsweise die Fahrzeugsensordaten umfassen können, wie stark ein Stoßdämpfer des Kraftfahrzeugs 1 ausgelenkt wurde und dazu bestimmen, wie hoch das Drucksignal, insbesondere ein Druckmaximum und/oder eine Dauer des Drucks, ist. Liegen diese Werte über einem vorgegebenen Schwellenwert und wurde gleichzeitig eine Auslenkung eines Federwegs über einen vorbestimmten Wert erfasst, kann festgestellt werden, dass ein Aufprall auf die Traktionsbatterie 4 stattgefunden hat. Alternativ oder zusätzlich können Umfeldsensordaten, das bedeutet Kamera- oder Radardaten des Kraftfahrzeugs 1, verwendet werden, um zu bestimmen, ob in der Fahrzeugumgebung ein Objekt vorhanden ist, das in der Lage ist, einen Aufprall auf die Traktionsbatterieanordnung 2 durchzuführen. Zusammen mit diesen Informationen kann dann das Drucksignal daraufhin plausibilisiert werden, ob ein Aufprall entstanden ist oder nicht.

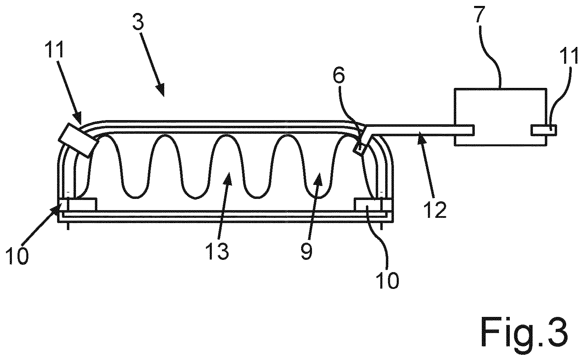

In Fig. 3 ist eine schematische Querschnittsansicht eines Unterbodenelements 3 gemäß einer beispielhaften Ausführungsform dargestellt. In dieser Ausgestaltungsform kann in dem vertieften Bereich 5 die luftgefüllte Kammer als ein luftgefüllter Folienkörper 9 ausgebildet sein. Der Folienkörper 9 kann beispielsweise ein Folienkissen sein, das ein- oder mehrteilig ausgebildet ist und das beispielsweise bei einem Herstellungsprozess in dem jeweiligen vertieften Bereich 5 ausgerollt beziehungsweise platziert wird. Dazu kann der Folienkörper 9 an vorhandenen Laschen 10 in dem vertieften Bereich 5 befestigt werden. Anschließend kann der Folienkörper 9 über ein oder mehrere Einlassventile 11 mit Luft gefüllt werden. Beispielsweise kann eines der Einlassventile 11 über den Schlauchanschluss 6 mit dem Folienkörper 9 verbunden sein, indem dieses über die Auswerteeinrichtung 7 und einen Druckschlauch 12 mit dem Folienkörper 9 gekoppelt wird. Alternativ kann das Einlassventil 11 auch einen eigenständigen Zugang in den Folienkörper 9 aufweisen.

Damit der Folienkörper 9 über die Zeit nicht in sich zusammenfällt, können zusätzlich ein oder mehrere Abstandhalter 13 in dem Folienkörper 9 bereitgestellt sein, die den Folienkörper, insbesondere ein Volumen des Folienkörpers 9, aufrechterhalten. Der Abstandhalter 13 kann beispielsweise eine Noppenform aufweisen, die im Wesentlichen aus Polyurethan gebildet sein kann. Insbesondere kann ein Material verwendet werden, das eine elastische Deformierbarkeit der Abstandhalter 13 gewährleistet. So kann der Abstandhalter 13 federnd sein, sodass er den Folienkörper 9 selbst aufblasbar aufdrückt und somit in einem Normalbetrieb ein konstantes Volumen in dem Folienkörper 9 bereitstellt. Auch kann somit bei einem Herstellungsprozess der Folienkörper 9 an die Traktionsbatterie 4 herangepresst werden, so dass sich dieser in dem Bauraum zwischen dem vertieften Bereich 5 und der Traktionsbatterie 4 anpasst.

Tritt nun ein Stoß von unten auf, kann, wie oben beschrieben, in dem Folienkörper 9 ein Drucksignal erzeugt werden, das über den Schlauchanschluss 6 und den Druckschlauch 12 an die Auswerteeinheit 7 weitergeleitet wird, die dazu ausgebildet ist, in Abhängigkeit des Drucksignals den Aufprall auf die Traktionsbatterie 4 zu erfassen. Die Ausgestaltung mit dem Folienkörper 9 hat den Vorteil, dass der vertiefte Bereich 5 nicht luftdicht abgedichtet werden muss und somit Wasser, das beispielsweise aufgrund der Kühlung der Traktionsbatterie 4 entstehen kann, durch geeignete Abflussöffnungen aus den vertieften Bereichen 5 abfließen kann, was ein Korrosionsrisiko der umliegenden Bauteile verringert.

Insgesamt zeigen die Beispiele, wie durch die Erfindung eine Sensierung von Deformationen mittels eines geschlossenen Hohlkörpers bereitgestellt werden kann.

## Patentansprüche

1. Traktionsbatterieanordnung (2) für ein Kraftfahrzeug (1) zum Erfassen eines Aufpralls auf eine Traktionsbatterie (4), umfassend die Traktionsbatterie (4) und ein Unterbodenelement (3), das an einer Unterseite der Traktionsbatterie (4) angeordnet ist, wobei das Unterbodenelement (3) zumindest einen vertieften Bereich (5) aufweist, der als Aussparung des Unterbodenelements (3) bereitgestellt ist, in dem eine luftgefüllte Kammer zwischen dem Unterbodenelement (3) und der Unterseite der Traktionsbatterie (4) ausgebildet ist, wobei die Kammer mit einer Auswerteeinheit (7) gekoppelt ist, die dazu ausgebildet ist, ein Drucksignal eines Luftdrucks in der Kammer zu bestimmen und in Abhängigkeit des Drucksignals den Aufprall auf die Traktionsbatterie (4) zu erfassen.

2. Traktionsbatterieanordnung (2) nach Anspruch 1, wobei die Kammer seitlich umlaufend durch ein Dichtmaterial (8), insbesondere durch eine Polyurethandichtung, nach außen abgedichtet ist.

3. Traktionsbatterieanordnung (2) nach einem der vorhergehenden Ansprüche, wobei die Kammer in dem vertieften Bereich (5) als ein luftgefüllter Folienkörper (9) ausgebildet ist.

4. Traktionsbatterieanordnung (2) nach Anspruch 3, wobei in dem Folienkörper (9) zumindest ein Abstandhalter (13) angeordnet ist, der dazu ausgebildet ist, ein luftgefülltes Volumen in dem Folienkörper (9) aufrechtzuerhalten.

5. Traktionsbatterieanordnung (2) nach Anspruch 4, wobei der zumindest eine Abstandhalter (13) elastisch deformierbar ausgebildet ist.

6. Traktionsbatterieanordnung (2) nach einem der Ansprüche 3 bis 5, wobei der Folienkörper (9) eine Mehrzahl von Luftkammern aufweist.

7. Traktionsbatterieanordnung (2) nach einem der vorhergehenden Ansprüche, wobei die Kammer zumindest ein Einlassventil (11) und einen Schlauchanschluss (6) aufweist, wobei der Schlauchanschluss (6) dazu ausgebildet ist, die Kammer über einen Druckschlauch (12) mit der Auswerteeinheit (7) zu verbinden und wobei das Einlassventil (11) dazu ausgebildet ist, Luft mit einem vorgegebenen Druck in die Kammer einzuleiten, wobei das Einlassventil (11) über den Druckschlauch (12) und/oder separat zum Druckschlauch (12) mit der Kammer gekoppelt ist.

8. Traktionsbatterieanordnung (2) nach einem der vorhergehenden Ansprüche, wobei die Auswerteeinheit (7) dazu ausgebildet ist, zum Erfassen des Aufpralls das Drucksignal auf ein Druckmaximum, eine Dauer des Drucks über einen vorgegebenen Schwellwert, ein Integral über den Druck und/oder eine Flankensteilheit zu analysieren.

9. Traktionsbatterieanordnung (2) nach einem der vorhergehenden Ansprüche, wobei die Auswerteeinheit (7) dazu ausgebildet ist, Fahrzeugsensordaten und/oder Umfeldsensordaten des Kraftfahrzeugs (1) zu empfangen und das bestimmte Drucksignal anhand der Fahrzeugsensordaten und/oder der Umfeldsensordaten zu plausibilisieren, und/oder eine Sensitivität zum Erfassen des Aufpralls einzustellen.

10. Kraftfahrzeug (1) mit einer Traktionsbatterieanordnung (2) nach einem der vorhergehenden Ansprüche.

11. Verfahren zum Erfassen eines Aufpralls auf eine Traktionsbatterieanordnung (2) gemäß einem der Ansprüche 1 bis 9, wobei das Verfahren die folgenden Schritte umfasst:
- Bestimmen eines Drucksignals eines Luftdrucks in der Kammer;
- Bestimmen, ob eine Änderung des Drucksignals über einen vorgegebenen Druckschwellenwert liegt;
- Erfassen des Aufpralls auf eine Traktionsbatterie (4) der Traktionsbatterieanordnung (2), falls festgestellt wird, dass die Änderung des Drucksignals über dem vorgegebenen Schwellenwert liegt.

12. Steuervorrichtung, die dazu ausgebildet ist, das Verfahren nach Anspruch 11 durchzuführen.

## Claims

1. A traction battery assembly (2) for a motor vehicle (1) for detecting an impact with a traction battery (4), comprising the traction battery (4) and an underbody element (3), which is arranged on an underside of the traction battery (4), wherein the underbody element (3) comprises at least one recessed region (5), which is provided as a cut-out in the underbody element (3), in which an air-filled chamber is formed between the underbody element (3) and the underside of the traction battery (4), wherein the chamber is coupled to an evaluation unit (7), which is designed to determine a pressure signal for an air pressure in the chamber and to detect the impact with the traction battery (4) on the basis of the pressure signal.

2. The traction battery assembly (2) according to claim 1, wherein the chamber is laterally peripherally sealed against the outside by a sealing material (8), in particular by a polyurethane seal.

3. The traction battery assembly (2) according to any of the preceding claims, wherein the chamber is designed as an air-filled film body (9) in the recessed region (5).

4. The traction battery assembly (2) according to claim 3, wherein at least one spacer (13), which is designed to maintain an air-filled volume in the film body (9), is arranged in the film body (9).

5. The traction battery assembly (2) according to claim 4, wherein the at least one spacer (13) is designed to be elastically deformable.

6. The traction battery assembly (2) according to any of claims 3 to 5, wherein the film body (9) comprises a plurality of air chambers.

7. The traction battery assembly (2) according to any of the preceding claims, wherein the chamber comprises at least an inlet valve (11) and a hose connection (6), wherein the hose connection (6) is designed to connect the chamber to the evaluation unit (7) via a pressure hose (12), and wherein the inlet valve (11) is designed to introduce air having a predetermined pressure into the chamber, wherein the inlet valve (11) is coupled to the chamber via the pressure hose (12) and/or separately from the pressure hose (12).

8. The traction battery assembly (2) according to any of the preceding claims, wherein the evaluation unit (7) is designed to analyze the pressure signal up to a pressure maximum, a duration of the pressure above a predetermined threshold value, an integral of the pressure, and/or an edge steepness in order to detect the impact.

9. The traction battery assembly (2) according to any of the preceding claims, wherein the evaluation unit (7) is designed to receive vehicle sensor data and/or surround sensor data from the motor vehicle (1) and to determine the plausibility of the determined pressure signal on the basis of the vehicle sensor data and/or the surround sensor data, and/or to set a sensitivity for detecting the impact.

10. A motor vehicle (1) comprising a traction battery assembly (2) according to any of the preceding claims.

11. A method for detecting an impact with a traction battery assembly (2) according to any of claims 1 to 9, wherein the method comprises the following steps:
- determining a pressure signal for an air pressure in the chamber;
- determining whether a change in the pressure signal is above a predetermined pressure threshold value;
- detecting the impact with a traction battery (4) of the traction battery assembly (2) if it is established that the change in the pressure signal is above the predetermined threshold value.

12. A control device which is designed to carry out the method according to claim 11.

## Revendications

1. Agencement (2) de batterie de traction pour un véhicule automobile (1) pour la détection d'un impact sur une batterie de traction (4), comprenant la batterie de traction (4) et un élément (3) de bas de caisse qui est disposé sur une face inférieure de la batterie de traction (4), dans lequel l'élément (3) de bas de caisse comprend au moins une zone (5) en creux qui est prévue sous forme d'évidement de l'élément (3) de bas de caisse, dans laquelle une chambre remplie d'air est formée entre l'élément (3) de bas de caisse et la face inférieure de la batterie de traction (4), dans lequel la chambre est accouplée à une unité d'évaluation (7) qui est conçue pour déterminer un signal de pression d'une pression d'air dans la chambre et pour détecter l'impact sur la batterie de traction (4) en fonction du signal de pression.

2. Agencement (2) de batterie de traction selon la revendication 1, dans lequel la chambre est obturée vers l'extérieur sur tout le pourtour latéral par un matériau d'étanchéité (8), en particulier par un joint en polyuréthane.

3. Agencement (2) de batterie de traction selon l'une des revendications précédentes, dans lequel la chambre dans la zone (5) en creux est conçue comme un corps en feuille (9) rempli d'air.

4. Agencement (2) de batterie de traction selon la revendication 3, dans lequel dans lequel au moins une entretoise (13) est disposée dans le corps en feuille (9), laquelle est conçue pour maintenir un volume rempli d'air dans le corps en feuille (9).

5. Agencement (2) de batterie de traction selon la revendication 4, dans lequel l'au moins une entretoise (13) est conçue pour être déformable élastiquement.

6. Agencement (2) de batterie de traction selon l'une des revendications 3 à 5, dans lequel le corps en feuille (9) comprend une pluralité de chambres à air.

7. Agencement (2) de batterie de traction selon l'une des revendications précédentes, dans lequel la chambre comprend au moins une soupape d'admission (11) et un raccord de tuyau (6), dans lequel le raccord de tuyau (6) est conçu pour relier la chambre à l'unité d'évaluation (7) par l'intermédiaire d'un tuyau de pression (12) et dans lequel la soupape d'admission (11) est conçue pour introduire de l'air à une pression prédéfinie dans la chambre, dans lequel la soupape d'admission (11) est accouplée à la chambre par l'intermédiaire du tuyau flexible de pression (12) et/ou séparément du tuyau flexible de pression (12).

8. Agencement (2) de batterie de traction selon l'une des revendications précédentes, dans lequel l'unité d'évaluation (7) est conçue pour analyser, afin de détecter l'impact, le signal de pression à une pression maximale, une durée de la pression supérieure à une valeur seuil prédéfinie, une intégrale de la pression et/ou une pente.

9. Agencement (2) de batterie de traction selon l'une des revendications précédentes, dans lequel l'unité d'évaluation (7) est conçue pour recevoir des données de capteurs de véhicule et/ou des données de capteurs environnementaux du véhicule automobile (1) et pour vérifier la plausibilité du signal de pression déterminé à l'aide des données de capteurs de véhicule et/ou des données de capteurs environnementaux, et/ou pour régler une sensibilité de détection de l'impact.

10. Véhicule automobile (1) doté d'un agencement (2) de batterie de traction selon l'une des revendications précédentes.

11. Procédé de détection d'un impact sur un agencement (2) de batterie de traction selon l'une des revendications 1 à 9, le procédé comprenant les étape suivantes :
- détermination d'un signal de pression d'une pression d'air dans la chambre ;
- détermination si une modification du signal de pression dépasse une valeur de pression seuil prédéfinie ;
- détection de l'impact sur une batterie de traction (4) de l'agencement (2) de batterie de traction s'il est constaté que la modification du signal de pression dépasse la valeur seuil prédéfinie.

12. Dispositif de commande qui est conçu pour mettre en œuvre le procédé selon la revendication 11.
